# EUROPEAN PATENT APPLICATION

(11) **EP 4 610 641 A1**
(43) Date of publication of application: **03.09.2025**
(21) Application number: 23882617.6
(22) Date of filing: 24.10.2023
(51) Int. Cl.: G01N 23/083, G01N 23/04, G01T 7/00

(54) **X-RAY DETECTOR OF X-RAY IMAGING SYSTEM**

(30) Priority: 25.10.2022 JP 2022170541
(71) Applicant: Nihon Kessho Kogaku Co., Ltd., Tatebayashi-shi, Gunma 374-0047 (JP)
(72) Inventor: OTAKE, Makoto, Tatebayashi-shi, Gunma 374-0047 (JP); NISHIYAMA, Yoshinobu, Tatebayashi-shi, Gunma 374-0047 (JP); TATENO, Yosuke, Tatebayashi-shi, Gunma 374-0047 (JP); KAMESAKI, Kouji, Tatebayashi-shi, Gunma 374-0047 (JP); KAWASAKI, Shuichi, Tatebayashi-shi, Gunma 374-0047 (JP)
(74) Representative: Hoffmann Eitle
(86) International application number: PCT/JP2023/038275
(87) International publication number: WO 2024/090412

(57) **Abstract**

It is an object to provide an X-ray detector of an **X-**ray image capture system that is allowed to readily obtain an X-ray transmission image with a desired resolution or detection sensitivity in a case where the X-ray transmission image is acquired by the X-ray detector that uses an X-ray line sensor to be scanned. Hence, an X-ray detector 40 has a plurality of X-ray line sensors 41, 42 where respective X-ray detection elements are arranged in a one-dimensional manner with respect to a horizontal direction and respective X-ray detection element groups are arranged to be back-to-back or front-to-front and a collimator that is provided on end parts of the X-ray line sensors 41, 42 that face an X-ray source. Furthermore, ray-receiving surface area sizes S1, S2 of the respective X-ray detection element groups are different.

## Description

### Field

The present invention relates to an X-ray detector of an X-ray image capture system that is allowed to readily obtain an X-ray transmission image with a desired resolution or detection sensitivity in a case where such an X-ray transmission image is acquired by such an X-ray detector that uses an X-ray line sensor to be scanned.

### Background

In recent years, deteriorating of a construction such as a bridge is problematic and maintenance thereof is needed urgently. One of methods that inspect an inside of a construction non-destructively for such maintenance is an X-ray transmission image inspection. In such an X-ray transmission image inspection, for example, an X-ray detector that uses an X-ray line sensor is used. Such an X-ray detector that uses an X-ray line sensor is frequently used in a non-destructive inspection for security and/or for industry.

For example, Patent Literature 1 suggests an X-ray image capture system that includes an X-ray source that emits an X-ray(s), a detector that detects an X-ray(s) that transmit(s) through an image capture target subject body, a semiconductor detector array that moves inside the detector, a semiconductor detector array driving unit that moves the semiconductor detector array in upward and downward directions, and a signal processing circuit that processes a measurement signal that is measured by the detector so to execute imaging. Such an X-ray image capture system uses a semiconductor detector with a high sensitivity for an X-ray(s) with a high energy.

### Citation List

### Patent Literature

Japanese Patent No. 6411775

### Summary

### Technical Problem(s)

Meanwhile, in an X-ray detector that uses an X-ray line sensor, elements with one type of ray-receiving surface area (pixel size) are arranged in a one-dimensional manner. Hence, in a case where an amount of a transmissive X-ray(s) is low and a pixel size is small, an X-ray transmission image with a high resolution and a degraded detection sensitivity is provided, and in a case where such a pixel size is large, an X-ray transmission image with a low resolution and a high detection sensitivity is provided, so that it may be impossible to obtain a desired X-ray transmission image.

Additionally, although it is also considered that replacement with an X-ray line sensor with a different pixel size and rescanning are executed or scanning at a changed scanning rate is executed, duplication of efforts is caused.

The present invention is provided by taking the above into consideration and aims to provide an X-ray detector of an X-ray image capture system that is allowed to readily obtain an X-ray transmission image with a desired resolution or detection sensitivity in a case where such an X-ray transmission image is acquired by such an **X-**ray detector that uses an X-ray line sensor to be scanned.

### Solution(s) to Problem(s)

In order to solve a problem(s) as described above and achieve an object(s), the present invention is an X-ray detector of an X-ray image capture system that acquires an X-ray transmission image and includes an X-ray source that emits an X-ray, an X-ray detector that detects an X-ray that transmits through a subject body, and a signal processing circuit that processes a measurement signal that is measured by the X-ray detector to execute imaging, characterized in that the X-ray detector has a plurality of X-ray line sensors where respective X-ray detection elements are arranged in a one-dimensional manner with respect to a horizontal direction and respective X-ray detection element groups are arranged to be back-to-back or front-to-front and a collimator that is provided on end parts of the plurality of X-ray line sensors that face the X-ray source, and it includes a driving control mechanism that moves the X-ray detector in upward and downward directions and rotates the X-ray detector around an axis in pixel pitch directions of the X-ray line sensors in association with the movement to tilt it with respect to a horizontal plane and thereby match an emission direction of an emitted X-ray and an X-ray introduction direction of the collimator.

Furthermore, the present invention is an invention as described above, characterized in that the respective X-ray detection element groups are provided with ray-receiving surface area sizes that are different.

Furthermore, the present invention is an invention as described above, characterized in that the respective X-ray detection element groups are provided with ray-receiving surface area sizes that are identical, and are arranged to be shifted in a horizontal direction.

Furthermore, the present invention is an invention as described above, characterized in that an **X-**ray introduction width of the collimator is greater than widths of the X-ray detection elements.

Furthermore, the present invention is an invention as described above, characterized in that an X-ray introduction width of the collimator is a predetermined value that is provided by adding twice as much as an error width of a back end part of the collimator that depends on an X-ray introduction length of the collimator and an angular control error angle of the driving control mechanism to widths of the X-ray detection elements, or greater.

Furthermore, the present invention is an invention as described above, characterized in that the X-ray line sensors have a scintillator and a light detector that detects scintillation light that is emitted by the scintillator.

Furthermore, the present invention is an invention as described above, characterized in that the X-ray detector has a temperature sensor that measures a temperature of the X-ray detection elements, and the signal processing circuit corrects the X-ray transmission image based on a measurement temperature that is measured by the temperature sensor and information of a relationship between a preliminarily acquired temperature and the measurement signal.

Furthermore, the present invention is an invention as described above, characterized in that the X-ray source is a pulsed X-ray source that emits X-ray pulses, and the signal processing circuit acquires a non-emission signal between the X-ray pulses and corrects the X-ray transmission image based on the non-emission signal.

### Advantageous Effect(s) of Invention

According to the present invention, it is possible to readily obtain an X-ray transmission image with a desired resolution or detection sensitivity in a case where such an X-ray transmission image is acquired by an X-ray detector that uses an X-ray line sensor to be scanned.

### Brief Description of Drawing(s)

FIG. 1 is a perspective view that illustrates a schematic configuration of an X-ray image capture system that is embodiment 1 of the present invention.
FIG. 2 is a side view of an X-ray image capture system in an X-Z plane as illustrated in FIG. 1.
FIG. 3 is a perspective view that illustrates a configuration inside a housing in a state where an outer wall surface at an outermost perimeter is removed.
FIG. 4 is a plan view of a configuration of an X-ray detector and a diagram that schematically illustrates a component(s) that is/are connected thereto.
FIG. 5 is a cross-sectional view of an X-ray detector along line A-A as illustrated in FIG. 4.
FIG. 6 is a diagram that illustrates a relationship among an X-ray introduction width of a collimator, a width of a scintillator, and an X-ray(s) according to the present embodiment 1.
FIG. 7 is a diagram that illustrates a relationship among an X-ray introduction width of a collimator, a width of a scintillator, and an X-ray(s) in a conventional X-ray detector.
FIG. 8 is a diagram that illustrates a positional relationship between a collimator and a scintillator.
FIG. 9 is an explanatory diagram that illustrates an example of determination of an X-ray introduction width of a collimator.
FIG. 10 is an explanatory diagram that illustrates an example of determination of an X-ray introduction width of a collimator.
FIG. 11 is a diagram that illustrates an example where X-ray transmission images that are provided by an X-ray detector according to the present embodiment 1 and a conventional X-ray detector are compared.
FIG. 12 is a diagram that illustrates an output waveform(s) of an X-ray(s) at a time when an X-ray source is a pulsed X-ray source.
FIG. 13 is an explanatory diagram that explains a configuration of an X-ray detector that is embodiment 2 of the present invention.
FIG. 14 is an explanatory diagram that explains a configuration of an X-ray detector that is variation 3. Description of Embodiment(s)

Hereinafter, an embodiment(s) of this invention will be explained with reference to the accompanying drawing(s).

### <Embodiment 1>

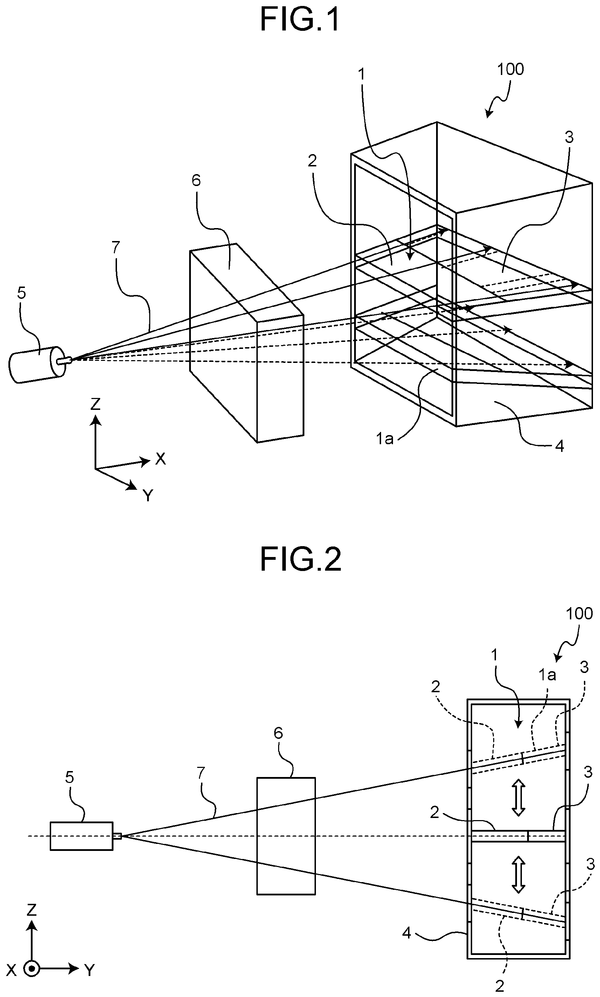

FIG. 1 is a perspective view that illustrates a schematic configuration of an X-ray image capture system 100 that is embodiment 1 of the present invention. FIG. 2 is a side view of an X-ray image capture system 100 in an X-Z plane as illustrated in FIG. 1. As illustrated in FIG. 1 and FIG. 2, the X-ray image capture system 100 has an X-ray source 5 that emits an X-ray(s) and an X-ray detector 1 where the X-ray source 5 and the X-ray detector are arranged so as to interpose a subject body 6 therebetween. The X-ray detector 1 detects an X-ray(s) 7 that transmit(s) through and is/are attenuated by a subject body 6. The X-ray detector 1 has a collimator 2 and an X-ray line sensor 3. The X-ray line sensor 3 is provided with X-ray detection elements that are arranged in a one-dimensional manner with respect to a horizontal direction(s) (±Y-directions), and detects an X-ray(s) 7 that is/are input through the collimator 2. The collimator 2 is provided on an end part of the X-ray line sensor 3 that faces the X-ray source 5 and prevents various types of a scattered ray(s) from being incident on the X-ray line sensor 3. The collimator 2 forms a parallel gap that is interposed between flat plates thereof and extends in a horizontal direction(s), as described later. Additionally, the collimator 2 may be a through-hole that is formed in a horizontal direction(s) for each element of the X-ray line sensor 3. Furthermore, a gap of the collimator 2 does not have to be parallel.

The X-ray detector 1 is arranged inside an X-ray detection box 1a. As the X-ray detection box 1a is moved inside a housing 4, the X-ray detector 1 is moved simultaneously. Such movement (scan) moves the X-ray detector 1 in upward and downward directions (±Z-directions) and rotates the X-ray detector 1 in an X-Z plane around an axis in a pixel pitch direction(s) (a horizontal direction(s)) of the X-ray line sensor 3, that is, an axis C as a center thereof, in association with such movement, so as to tilt it with respect to a horizontal plane (an X-Y plane) and thereby match an emission direction(s) of an emitted X-ray(s) and an X-ray introduction direction of the collimator 2.

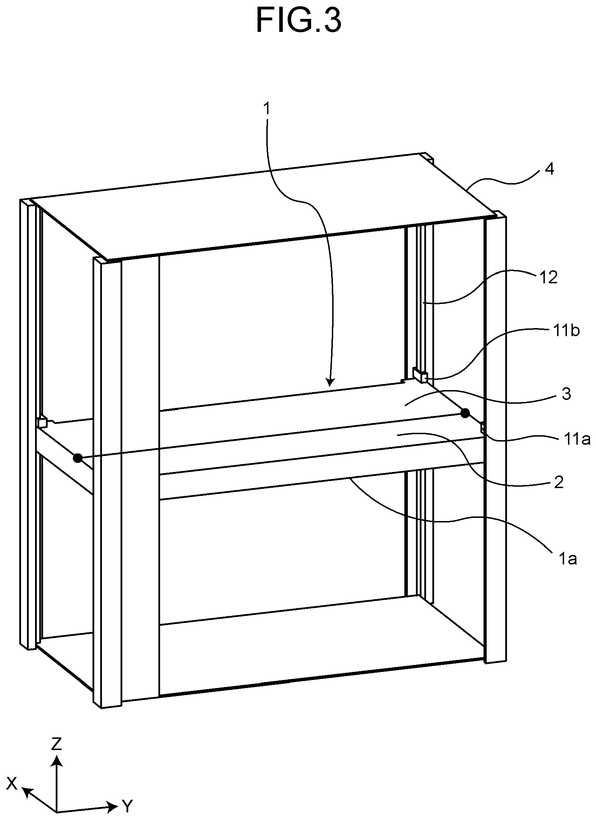

FIG. 3 is a perspective view that illustrates a configuration inside a housing 4 in a state where an outer wall surface at an outermost perimeter is removed. Movement of an X-ray detector 1 inside the housing 4 as described above is executed by a driving control mechanism. Such a driving control mechanism has driving units 11a, 11b according to a guide structure(s) on support parts of the housing 4 at four corners thereof. Herein, the driving unit 11a is allowed to move a side of a collimator 2 upward and downward through an X-ray detection box 1a. Furthermore, the driving unit 11b is allowed to move a side of an X-ray line sensor 3 upward and downward through the X-ray detection box 1a. Then, amounts of movement of such driving units 11a, 11b are controllable independently. Additionally, the driving units 11a, 11b are moveable upward and downward on guidelines 12 that are provided on support parts of the housing 4, at four conners of the X-ray detection box 1a.

The X-ray detector 1 controls amounts of movement of the driving unit 11a and the driving unit 11b that are provided on supports of the housing 4, so as to set a tilt for each height position as illustrated in FIG. 2 where such setting is executed in such a manner that the X-ray detector 1 is arranged on a straight line from an originating point of an X-ray source 5 at any height position.

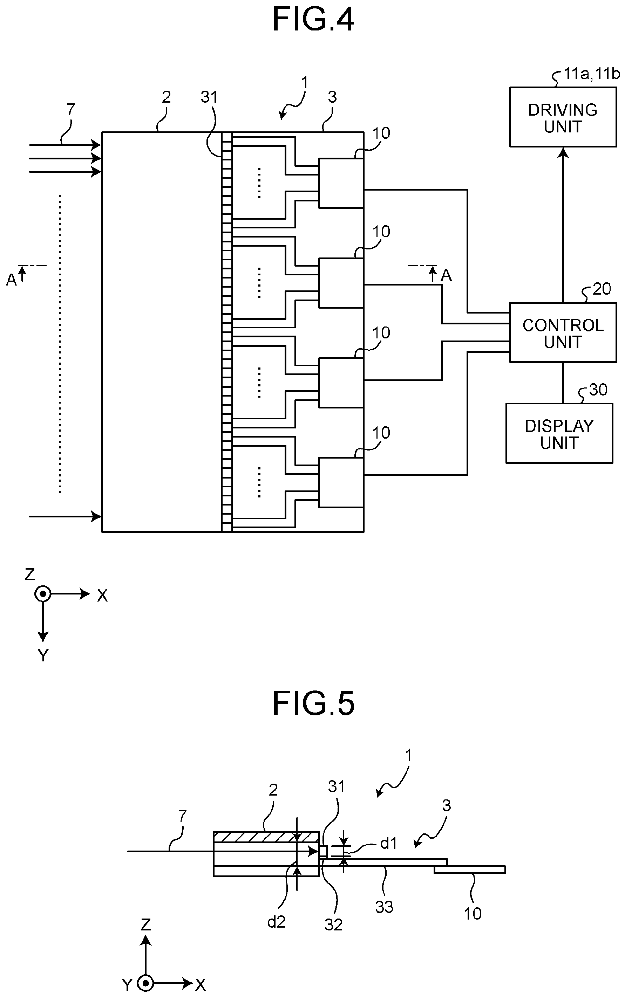

FIG. 4 is a plan view of a configuration of an X-ray detector 1 and a diagram that schematically illustrates a component(s) that is/are connected thereto. Furthermore, FIG. 5 is a cross-sectional view of an X-ray detector 1 along line A-A as illustrated in FIG. 4. As illustrated in FIG. 4 and FIG. 5, an end part of an X-ray line sensor 3 that faces an X-ray source 5 is arranged on an end part of a parallel gap of a collimator 2 in an X-direction. The X-ray line sensor 3 has a scintillator 31 and a light detector. The scintillator 31 emits scintillation light due to an incident X-ray(s). Scintillation light is detected by a light detector 32 that is provided on a side part of the scintillator 31 (±Z-directions). The scintillator 31 is provided with a separator that corresponds to each of light detection elements of the light detector 32 that are arrayed thereon, so as to prevent scattering of an X-ray(s) and crosstalk. Additionally, the light detector 32 that is attached to a side part of the scintillator 31 is not limited to ±Z-directions of the scintillator 31 and is anything where it may be, for example, a +X-direction.

The light detector 32 is provided on a substrate 33 and the scintillator 31 is arranged on an upper part of the light detector 32 (a Z-direction). Additionally, a reflective film is formed on a surface other than that on a side of the light detector 32 in such a manner that scintillation light is not leaked to an outside in an area that is separated by a separator, and an optical waveguide film is provided on a surface on a side of the light detector 32 so as to wave-guide scintillation light to the light detector 32.

A signal processing circuit 10 is connected to another end side of the substrate 33 (an X-direction) and a wire that connects the light detector 32 and the signal processing circuit 10 is formed on the substrate 33. The signal processing circuit 10 amplifies a measurement signal from each element of the light detector 32, converts an amplified analog signal to a digital signal, and produces an X-ray transmission image based on a converted digital signal. Additionally, a number of arrayed elements of the X-ray line sensor 3 is, for example, 512 that is divided into 4 sets of 128 elements in the present embodiment where four signal processing circuits 10 process divided measurement signals in parallel.

An X-ray transmission image that is output from the signal processing circuit 10 is output to a control unit 20 and a combined X-ray transmission image is output to a display unit 30. Furthermore, the control unit 20 drives and controls driving units 11a, 11b as described above. The driving units 11a, 11b and the control unit 20 that drives and controls them are a driving control mechanism. Furthermore, the control unit 20 associates driving control (scan control) of the driving units 11a, 11b with a position of an acquired X-ray transmission image.

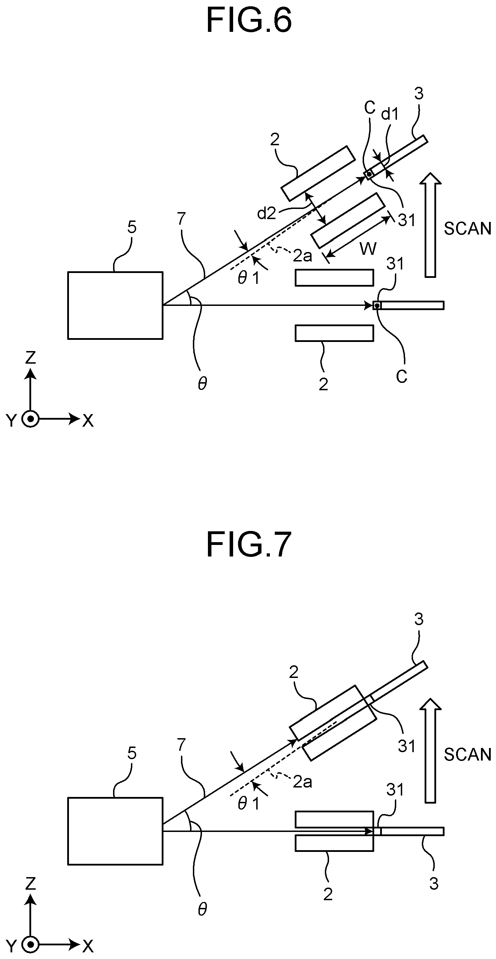

FIG. 6 is a diagram that illustrates a relationship among an X-ray introduction width d2 of a collimator 2, a width d1 of a scintillator 31, and an X-ray(s) 7 according to the present embodiment 1. Furthermore, FIG. 7 is a diagram that illustrates a relationship among an X-ray introduction width d2 of a collimator 2, a width d1 of a scintillator 31, and an X-ray(s) 7 in a conventional X-ray detector. As illustrated in FIG. 6, in the present embodiment 1, an X-ray introduction width d2 of the collimator 2 is greater than a width d1 of the scintillator 31 (an X-ray detection element). On the other hand, an X-ray introduction width d2 of the collimator 2 of a conventional X-ray detector is substantially identical to a width d1 of the scintillator 31.

Herein, as illustrated in FIG. 6, the collimator 2 and an X-ray line sensor 3 are scanned in ±Z-directions and rotated around an axis C in a pixel pitch direction(s) of the X-ray line sensor 3 as a center thereof, through an X-ray detection box 1a, depending on an angle(s) θ of arriving of an X-ray(s) 7 where control is executed so as to match an arrival direction(s) of such an X-ray(s) 7 and an X-ray introduction direction of the collimator 2. However, as illustrated in FIG. 7, as an angular shift(s) θ1 between an arrival direction(s) of an X-ray(s) 7 and an X-ray introduction direction 2a of the collimator 2 is/are caused in a conventional X-ray detector, an X-ray(s) 7 that arrive(s) at an inside of the collimator 2 impinge(s) on a tip part and/or an inner wall of the collimator 2 so as to produce an area that is not allowed to receive such an X-ray(s) 7 in an area on a front surface of the collimator 2 and thereby produce a shadow, etc., in an image, so that it is impossible to obtain a desired resolution or detection sensitivity. On the other hand, in embodiment 1 as illustrated in FIG. 6, an X-ray introduction width d2 of the collimator 2 is greater than a width d1 of the scintillator 31, so that an X-ray(s) 7 arrive(s) at all areas on a front surface of the collimator 2 in such a manner that it is possible to receive it/them even when an angular shift(s) θ1 is/are produced, and thereby it is possible to obtain a desired resolution or detection sensitivity.

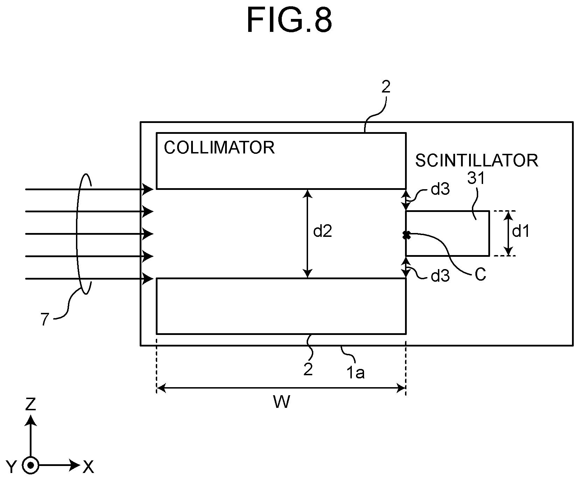

Meanwhile, an X-ray introduction width d2 of the collimator 2 is greater than a width d1 of the scintillator 31 where, specifically, as illustrated in FIG. 8, a front end center (an axis C) of the scintillator 31 is positioned at a center of the collimator 2 on a back end side thereof, each width between the scintillator 31 and the collimator 2 is provided as an error width d3, and such an X-ray introduction width d2 is a predetermined value that is provided by adding twice as much as such an error width d3 to such a width d1 (d2 = d1 + d3 x 2). Additionally, it is sufficient that an X-ray introduction width d2 is a predetermined value (d2 = d1 + d3 x 2) or greater.

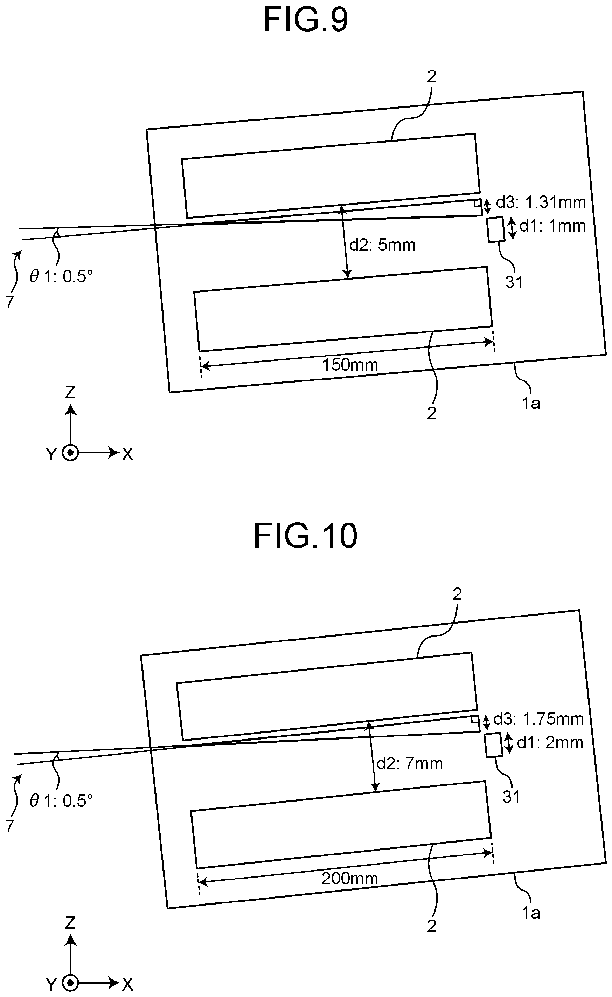

An error width d3 is determined by an X-ray introduction length W of the collimator 2 and an angular shift(s) θ1 (a half of an angular control error angle of the X-ray detection box 1a). Then, an X-ray introduction width d2 is determined by a width d1 of the scintillator 31 and an error width d3. For example, as illustrated in FIG. 9, in a case where an X-ray introduction length W is 150 mm and an angular shift θ1 is 0.5° (an angular control error angle = ±0.5°), an error width d3 is 1.31 mm from a relation of d3 = W x tan θ1. Herein, in a case where a width d1 is 1 mm, an X-ray introduction width d2 is set at 3.62 mm that is provided by adding twice as much as an error width d3 to such a width d1, or greater. In such a case, it is preferable to set an X-ray introduction width d2 at 5 mm by taking unevenness of accuracy of an angular shift θ1 and prevention of receiving of a scattered ray(s) into consideration. Similarly, as illustrated in FIG. 10, in a case where an X-ray introduction length W is 200 mm and an angular shift θ1 is 0.5° (an angular control error angle = ±0.5°), an error width d3 is 1.75 mm. Herein, in a case where a width d1 is 2 mm, an X-ray introduction width d2 is set at 5.5 mm that is provided by adding twice as much as an error width d3 to such a width d1, or greater. In such a case, it is preferable to set an X-ray introduction width d2 at 7 mm by taking unevenness of accuracy of an angular shift θ1 and prevention of receiving of a scattered ray(s) into consideration.

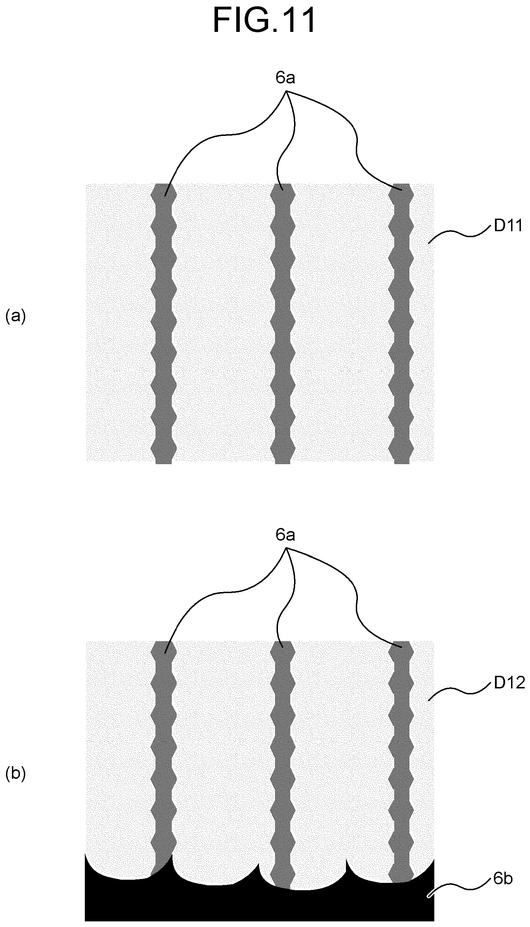

FIG. 11 is a diagram that illustrates an example where X-ray transmission images that are provided by an X-ray detector 1 according to the present embodiment 1 and a conventional X-ray detector are compared. FIG. 11(a) illustrates an example of an X-ray transmission image D11 that is captured by an X-ray detector 1 according to the present embodiment 1 and FIG. 11(b) illustrates an example of an X-ray transmission image D12 that is captured by a conventional X-ray detector. Additionally, for any of X-ray transmission images D11, D12, a concrete member that has a reinforcing steel 6a is provided as a subject body 6. Whereas, in FIG. 11(b), an X-ray introduction width d2 of a collimator is identical to a width d1 of a scintillator 31, so that an X-ray transmission image D12 is provided where a shadow 6b is produced at a place where it is impossible to receive an X-ray(s) 7 due to an angular shift with respect to an arrival direction(s) of such an X-ray(s) 7, in FIG. 11(a), an X-ray introduction width d2 of a collimator is greater than a width d1 of a scintillator 31, so that a place where it is impossible to receive an X-ray(s) 7 is absent even when an angular shift(s) with respect to an arrival direction(s) of such an X-ray(s) 7 is/are produced, so that it is possible to obtain a normal X-ray transmission image D11 where a shadow 6b, etc., is/are absent.

### <Variation 1>

Herein, an X-ray detector 1 executes outdoor inspection, and hence, influences a measurement signal due to an influence of a change of an outside air temperature. As a temperature of the X-ray detector 1 is raised, a dark current is increased. In a case where an X-ray transmission image is produced, a measurement signal is calibrated by such a dark current where, if a difference between a dark current at a time of image capture and a dark current at a time of calibration is produced, an image quality of such an X-ray transmission image is influenced thereby. Therefore, correcting of a measurement signal at a time of image capture by a drift that is caused by a temperature at a time of image capture is needed.

Hence, in the present variation 1, an X-ray detector 1 is provided with a temperature sensor that measures a temperature of an X-ray detection element(s), and add temperature information to a header of information of a line of an image, and a signal processing circuit 10 corrects an X-ray transmission image based on a measurement temperature that is measured by a temperature sensor (temperature information) and information of a relationship between a preliminarily acquired temperature and a measurement signal.

### <Variation 2>

Although temperature correction of an X-ray transmission image is executed by using a temperature sensor in variation 1, in variation 2, an X-ray source 5 is a pulsed X-ray source that emits an X-ray pulse(s) such as a LINAC and a signal processing circuit 10 acquires a non-emission signal(s) between X-ray pulses and corrects an X-ray transmission image based on such a non-emission signal (s).

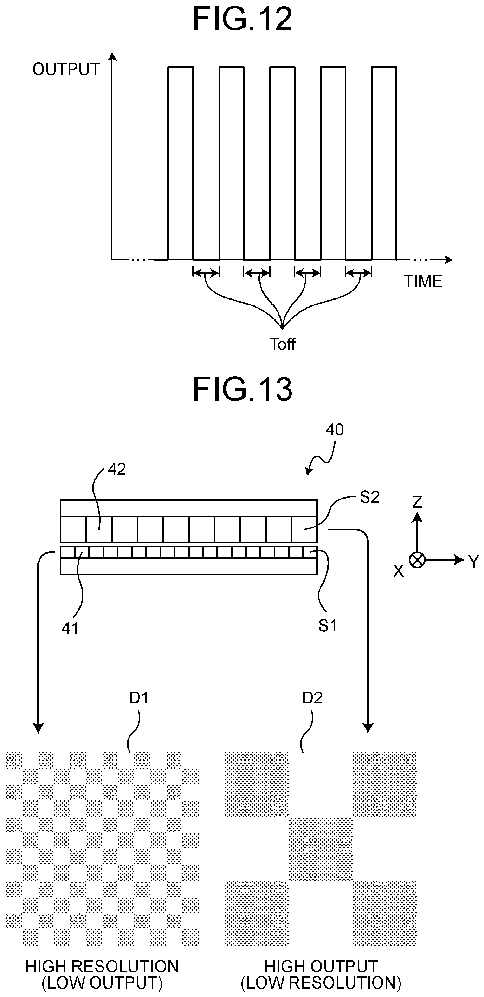

That is, as illustrated in FIG. 12, an image signal for each line is corrected by using a non-illumination signal(s) (a dark output) within a period of time Toff when no X-ray pulse is emitted. A pulsed X-ray source is used, so that image correction that is executed by dark signal acquisition that utilizes a non-illumination time for an X-ray(s) is allowed even during image capture, and hence, it is possible to obtain a more accurate X-ray transmission image.

### <Embodiment 2>

Herein, in a case where a subject body 6 is a thick concrete, etc., an amount of an X-ray(s) that transmit(s) through such a subject body 6 is low, so that it is desired that an X-ray detector 1 has a high detection sensitivity. However, increasing of a ray-receiving surface area of an element(s) of an X-ray line sensor 3 is needed in order to have a high detection sensitivity. On the other hand, as a size of a ray-receiving surface area is increased, it is impossible to obtain a high resolution. That is, it is impossible for an X-ray line sensor 3 with one type of ray-receiving surface area size to obtain a high detection sensitivity and a high resolution simultaneously. However, in a case where a thickness of a subject body 6 is changed and/or depending a content of inspection of such a subject body 6, prioritizing a high detection sensitivity or prioritizing a high resolution may be desired.

FIG. 13 is an explanatory diagram that explains a configuration of an X-ray detector 40 that is embodiment 2 of the present invention. Additionally, in FIG. 13, a configuration of a collimator 2 is removed. As illustrated in FIG. 13, the X-ray detector 40 has X-ray line sensors 41, 42 where respective X-ray detection elements are arranged in a one-dimensional manner with respect to a horizontal direction(s) and respective X-ray detection element groups are arranged so as to be back-to-back or front-to-front. Herein, a ray-receiving surface area size S1 of a scintillator of the X-ray line sensor 41 and a ray-receiving surface area size S2 of a scintillator of the X-ray line sensor 42 are different where such a ray-receiving surface area size S2 is greater than such a ray-receiving surface area size S1.

In such a case, an X-ray transmission image D1 is obtained from the X-ray line sensor 41 and an X-ray transmission image D2 is obtained from the X-ray line sensor 42. Then, an X-ray transmission image D1 is an image with a resolution that is higher than that of an X-ray transmission image D2 and such an X-ray transmission image D2 is an image with a detection sensitivity that is higher than that of such an X-ray transmission image D1.

In the present embodiment 2, it is possible to obtain an X-ray transmission image D1 with a high resolution and an X-ray transmission image D2 with a high detection sensitivity simultaneously by a single scan. Additionally, X-ray detection element groups are not limited to two ones and three or more X-ray detection element groups may be arranged.

Additionally, a pair of the X-ray line sensors 41, 42 is connected to an identical collimator 2. Therefore, in a case of a collimator 2 that is not provided with an element unit partition in a horizontal direction(s), it is possible to readily execute application thereof even when a ray-receiving surface area size is changed.

Furthermore, even when ray-receiving surface area sizes S1, S2 are identical, measurement signals of the X-ray line sensors 41, 42 are combined as needed, so that it is possible to increase a detection sensitivity.

### <Variation 3>

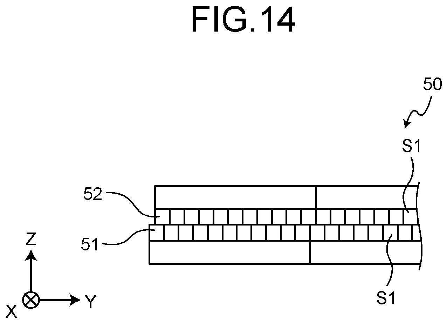

FIG. 14 is an explanatory diagram that explains a configuration of an X-ray detector 50 that is variation 3. Although the X-ray detector 50 in variation 3 has X-ray line sensors 51, 52 where X-ray detection element groups are arranged so as to be back-to-back or front-to-front, like embodiment 2, respective ray-receiving surface area sizes are an identical ray-receiving surface area size S1. However, arrangement thereof is executed in such a manner that pitches of respective X-ray detection element groups of the X-ray line sensors 51, 52 are shifted in a horizontal direction(s).

Therefore, in case where a plurality of X-ray detection element groups are connected in a horizontal direction(s) so as to compose a single X-ray line sensor, a gap is readily produced by joining among respective X-ray detection element groups where it is possible for another X-ray detection element that is back-to-back or front-to-front to compensate for a shadow that is produced by such a gap. As a result, it is possible to obtain a broad range of X-ray transmission images with a high image quality.

Although an X-ray line sensor in an embodiment, etc., as described above is a combination of a scintillator and a light detector, this is not limitative and a semiconductor line sensor that directly detects an X-ray(s) may be provided.

Additionally, respective configurations as illustrated in an embodiment(s) and a variation(s) as described above are functionally schematic and do not have to be physically configured as illustrated in a figure(s). That is, a mode(s) of dispersion/integration of respective devices and components is/are not limited to that/those illustrated in a figure(s), and it is possible to disperse/integrate a whole or a part thereof functionally or physically at any unit so as to provide a configuration, depending on various types of usage, etc.

### Reference Sign(s) List

1 X-ray detector
1a X-ray detection box
2 collimator
2a X-ray introduction direction
3 X-ray line sensor
4 housing
5 X-ray source
6 subject body
7 X-ray
10 signal processing circuit
11a, 11b driving unit
12 guideline
20 control unit
30 display unit
31 scintillator
32 light detector
33 substrate
40, 50 X-ray detector
41, 42, 51, 52 X-ray line sensor
100 X-ray image capture system
C axis
D1, D2, D11, D12 X-ray transmission image
d1 width
d2 X-ray introduction width
d3 error width
S1, S2 ray-receiving surface area size
Toff period of time
W X-ray introduction length
θ angle
θ1 angular shift

## Claims

1. An X-ray detector of an X-ray image capture system that acquires an X-ray transmission image and includes an X-ray source that emits an X-ray, an X-ray detector that detects an X-ray that transmits through a subject body, and a signal processing circuit that processes a measurement signal that is measured by the X-ray detector to execute imaging, **characterized in that**
the X-ray detector has a plurality of X-ray line sensors where respective X-ray detection elements are arranged in a one-dimensional manner with respect to a horizontal direction and respective X-ray detection element groups are arranged to be back-to-back or front-to-front and a collimator that is provided on end parts of the plurality of X-ray line sensors that face the X-ray source, and
it includes a driving control mechanism that moves the X-ray detector in upward and downward directions and rotates the X-ray detector around an axis in pixel pitch directions of the X-ray line sensors in association with the movement to tilt it with respect to a horizontal plane and thereby match an emission direction of an emitted X-ray and an X-ray introduction direction of the collimator.

2. The X-ray detector of an X-ray image capture system according to claim 1, **characterized in that**
the respective X-ray detection element groups are provided with ray-receiving surface area sizes that are different.

3. The X-ray detector of an X-ray image capture system according to claim 1, **characterized in that**
the respective X-ray detection element groups are provided with ray-receiving surface area sizes that are identical, and are arranged to be shifted in a horizontal direction.

4. The X-ray detector of an X-ray image capture system according to any one of claims 1 to 3, **characterized in that**
an X-ray introduction width of the collimator is greater than widths of the X-ray detection elements.

5. The X-ray detector of an X-ray image capture system according to any one of claims 1 to 3, **characterized in that**
an X-ray introduction width of the collimator is a predetermined value that is provided by adding twice as much as an error width of a back end part of the collimator that depends on an X-ray introduction length of the collimator and an angular control error angle of the driving control mechanism to widths of the X-ray detection elements, or greater.

6. The X-ray detector of an X-ray image capture system according to any one of claims 1 to 3, **characterized in that**
the X-ray line sensors have a scintillator and a light detector that detects scintillation light that is emitted by the scintillator.

7. The X-ray detector of an X-ray image capture system according to any one of claims 1 to 3, **characterized in that**
the X-ray detector has a temperature sensor that measures a temperature of the X-ray detection elements, and
the signal processing circuit corrects the X-ray transmission image based on a measurement temperature that is measured by the temperature sensor and information of a relationship between a preliminarily acquired temperature and the measurement signal.

8. The X-ray detector of an X-ray image capture system according to any one of claims 1 to 3, **characterized in that**
the X-ray source is a pulsed X-ray source that emits X-ray pulses, and
the signal processing circuit acquires a non-emission signal between the X-ray pulses and corrects the X-ray transmission image based on the non-emission signal.
